(19) Europäisches Patentamt
European Patent Office
Office européen des brevets

(11) **EP 1 865 335 A1**

(12) **EUROPÄISCHE PATENTANMELDUNG**

(43) Veröffentlichungstag:
**12.12.2007 Patentblatt 2007/50**

(51) Int Cl.:
***G01S 5/02*** (2006.01)   ***G01S 5/14*** (2006.01)

(21) Anmeldenummer: **06011780.1**

(22) Anmeldetag: **07.06.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT**
**80333 München (DE)**

(72) Erfinder:
• **Druzinic-Fiebach, Rok**
**16548 Glienicke (DE)**
• **Kuipers, Martin**
**14624 Dallgow-Döberitz (DE)**

(54) **Hybride Lokalisierung in einem Funkkommunikationssystem**

(57) Die Erfindung betrifft ein Verfahren zur Positionsbestimmung von Teilnehmerstationen (MS1, MS2, MS3) eines Funkkommunikationssystems, bei dem eine Bestimmung der Position einer ersten Teilnehmerstation (MS1, MS2, MS3) unter Verwendung eines ersten Lokalisierungsverfahrens erfolgt. Bei dem ersten Lokalisierungsverfahren werden Empfangszeitpunkts-Messungen der ersten Teilnehmerstation (MS1, MS2, MS3) und mindestens einer weiteren Teilnehmerstation (MS1, MS2, MS3) betreffend Signale einer Mehrzahl netzseitiger Funkstationen (BS1, BS2, BS3) verwendet. Weiterhin erfolgt eine Bestimmung der Position der ersten Teilnehmerstation (MS1, MS2, MS3) unter Verwendung eines zweiten Lokalisierungsverfahrens, wobei bei dem zweiten Lokalisierungsverfahren Signalstärke-Messungen der ersten Teilnehmerstation (MS1, MS2, MS3) betreffend Signale einer Mehrzahl netzseitiger Funkstationen (BS1, BS2, BS3) verwendet werden. Bei einer Bestimmung der Position einer zweiten Teilnehmerstation (MS1, MS2, MS3) unter Verwendung des zweiten Lokalisierungsverfahrens wird jeweils ein Ergebnis der Bestimmung der Position der ersten Teilnehmerstation (MS1, MS2, MS3) unter Verwendung des ersten Lokalisierungsverfahrens und des zweiten Lokalisierungsverfahrens berücksichtigt. Weiterhin betrifft die Erfindung eine Einrichtung und ein Computerprogrammprodukt zur Durchführung des Verfahrens.

FIG 1

**Beschreibung**

Die Erfindung betrifft ein Verfahren zur Positionsbestimmung von Teilnehmerstationen eines Funkkommunikationssystems, bei welchem eine Bestimmung der Position einer Teilnehmerstation unter Verwendung eines ersten und eines zweiten Lokalisierungsverfahrens erfolgt.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen. Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet.

Für Teilnehmerstationen von Funkkommunikationssystemen stehen oftmals so genannte ortsabhängige Dienste (Location Services LCS) zur Verfügung. Ortsabhängige Dienste, wie beispielsweise Routenplaner, sind Dienste, welche die Position einer Teilnehmerstation verwenden. Ortsabhängige Dienste benötigen somit Lokalisierungsverfahren, die eine Positionsbestimmung einer Teilnehmerstation ermöglichen. Lokalisierungsverfahren, beispielsweise satellitengestützte Verfahren wie das GPS (Global Positioning System), werden auf der Funkschnittstelle durch Software- und Hardwareerweiterungen des Funkkommunikationssystems realisiert. In netzseitigen Einrichtungen der Funkkommunikationssysteme oder auch in Teilnehmerstationen befinden sich Positionsbestimmungseinheiten, an welche Positionsbestimmungsanforderungen, beispielsweise von einem ortsabhängigen Dienst, gerichtet werden. Die Positionsbestimmungseinheiten lösen daraufhin den Positionsbestimmungsvorgang aus und nehmen in Abhängigkeit vom verwendeten Positionsbestimmungsverfahren Messungen und/oder Berechnungen vor, um die Position der Teilnehmerstation zu bestimmen und beispielsweise an den ortsabhängigen Dienst zu übergeben.

Bekannte Lokalisierungsverfahren verwenden unterschiedliche durch Messungen auf der Funkschnittstelle bestimmte Messwerte, um eine möglichst große Genauigkeit bei der Positionsbestimmung zu erreichen. Zu diesen Messwerten zählen beispielsweise Signallaufzeiten bzw. Empfangszeitpunkte von Signalen oder Empfangsfeldstärken. Weiterhin können unterschiedliche Lokalisierungsverfahren kombiniert werden, um eine bessere Genauigkeit der bestimmten Position zu erreichen.

Der Erfindung liegt die Aufgabe zugrunde, ein effizientes Verfahren zur Positionsbestimmung von Teilnehmerstationen aufzuzeigen. Weiterhin sollen eine Einrichtung und ein Computerprogrammprodukt zur Durchführung des Verfahrens vorgestellt werden.

Diese Aufgabe wird durch ein Verfahren mit den Merkmalen des Anspruchs 1, sowie durch eine Vorrichtung und ein Computerprogrammprodukt mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zur Positionsbestimmung von Teilnehmerstationen eines Funkkommunikationssystems erfolgt eine Bestimmung der Position einer ersten Teilnehmerstation unter Verwendung eines ersten Lokalisierungsverfahrens. Bei diesem ersten Lokalisierungsverfahren werden Empfangszeitpunkts-Messungen der ersten Teilnehmerstation und mindestens einer weiteren Teilnehmerstation betreffend Signale einer Mehrzahl netzseitiger Funkstationen verwendet. Weiterhin erfolgt eine Bestimmung der Position der ersten Teilnehmerstation unter Verwendung eines zweiten Lokalisierungsverfahrens. Bei diesem zweiten Lokalisierungsverfahren werden Signalstärke-Messungen der ersten Teilnehmerstation betreffend Signale einer Mehrzahl netzseitiger Funkstationen verwendet. Bei einer Bestimmung der Position einer zweiten Teilnehmerstation, welche unter Verwendung des zweiten Lokalisierungsverfahrens erfolgt, wird jeweils ein Ergebnis der Bestimmung der Position der ersten Teilnehmerstation, welche unter Verwendung des ersten Lokalisierungsverfahrens und des zweiten Lokalisierungsverfahrens erfolgte, berücksichtigt.

Die Position der ersten Teilnehmerstation wird zwei mal bestimmt, und zwar auf verschiedene Weise: zum einen unter Verwendung des ersten Lokalisierungsverfahrens, und zum anderen unter Verwendung des zweiten Lokalisierungsverfahrens. Die beiden Bestimmungen oder zumindest die für die Bestimmungen verwendeten Messungen finden etwa gleichzeitig statt. Die beiden Positionsbestimmungen beziehen sich somit auf den gleichen Aufenthaltsort der ersten Teilnehmerstation.

Gemäß dem ersten Lokalisierungsverfahren kommen Messungen der ersten Teilnehmerstation und Messungen von einer oder mehreren anderen Teilnehmerstationen zum Einsatz. Hierbei handelt es sich um Messungen von Empfangszeitpunkten von Signalen von netzseitigen Funkstationen. Eine Teilnehmerstation misst hierfür jeweils Signale von zwei oder mehreren netzseitigen Funkstationen. Vorzugsweise vermessen die mehreren Teilnehmerstationen Signale von den gleichen netzseitigen Funkstationen. So kann z.B. die erste Teilnehmerstation Signale von einer ersten und einer zweiten netzseitigen Funkstation hinsichtlich ihrer Empfangszeitpunkte vermessen, und eine andere Teilnehmerstation Signale der gleichen beiden netzseitigen Funkstationen. Alternativ kann die andere Teilnehmerstation Signale von der zweiten und einer dritten oder von einer dritten und einer vierten netzseitigen Funkstation vermessen. Vorteilhafterweise werden außer den erläuterten Messungen der Empfangszeitpunkte keine weiteren Messungen von Teilnehmerstationen für die Positionsbestimmung nach dem ersten Lokalisierungsverfahren verwendet, insbesondere keine Empfangsstärkemessungen.

Bei dem zweiten Lokalisierungsverfahren werden Messungen der ersten Teilnehmerstation verwendet. Hierbei handelt es sich um Messungen der Stärke von von der ersten Teilnehmerstation empfangenen Signalen. Die erste Teilnehmerstation vermisst hierbei Signale einer Mehrzahl von netzseitigen Funkstationen. Vorteilhafterweise werden außer den erläuterten Signalstärkemessungen der ersten Teilnehmerstation keine Messungen von Teilnehmerstationen, weder von der ersten noch von anderen Teilnehmerstationen, für die Positionsbestimmung nach dem zweiten Lokalisierungsverfahren verwendet, insbesondere keine Empfangszeitpunktmessungen.

Dadurch, dass die Position der ersten Teilnehmerstation auf zwei verschiedene Arten bestimmt wird, liegen zumindest zwei Positionsbestimmungsergebnisse für den Aufenthaltsort der ersten Teilnehmerstation vor. Beide Ergebnisse werden bei einer Positionsbestimmung einer zweiten Teilnehmerstation eingesetzt. Diese Positionsbestimmung der zweiten Teilnehmerstation erfolgt gemäß dem zweiten Lokalisierungsverfahren. D.h. bei dem Verfahren zur Bestimmung der Position der zweiten Teilnehmerstation werden Signalstärke-Messungen der zweiten Teilnehmerstation betreffend Signale einer Mehrzahl netzseitiger Funkstationen verwendet. Vorzugsweise wird zur Positionsbestimmung der zweiten Teilnehmerstation ausschließlich das zweite Lokalisierungsverfahren, d.h. insbesondere nicht das erste Lokalisierungsverfahren, eingesetzt.

Die Berücksichtigung der Positionsbestimmungen der ersten Teilnehmerstation bei der Positionsbestimmung der zweiten Teilnehmerstation kann auf verschiedenen Weisen erfolgen. Z.B. kann im Rahmen der Berücksichtigung die unter Verwendung des ersten Lokalisierungsverfahrens bestimmte Position der ersten Teilnehmerstation mit der unter Verwendung des zweiten Lokalisierungsverfahrens bestimmten Position der ersten Teilnehmerstation verglichen werden. Hierdurch kann insbesondere die Differenz der beiden bestimmten Positionen einbezogen werden. Mit Vorzug wird im Rahmen der Berücksichtigung unter Verwendung des Vergleichs ein bei dem zweiten Lokalisierungsverfahren verwendetes Modell, wie z.B. ein Pfadverluste beschreibendes Modell, verändert. Diese Veränderung kann dahingehend erfolgen, dass das Ergebnis des zweiten Lokalisierungsverfahrens dem des ersten Lokalisierungsverfahrens ähnlicher wird.

In Weiterbildung der Erfindung erfolgen für das erste Lokalisierungsverfahren die Empfangszeitpunkt-Messungen anhand der gleichen Signale wie die Signalstärke-Messungen. Dies bedeutet, dass eine Teilnehmerstation, welche für das erste Lokalisierungsverfahren sowohl Empfangszeitpunkt-Messungen als auch Signalstärke-Messungen durchführt, hierfür die gleichen Signale heranzieht.

Vorteilhaft ist es, wenn die Signale verschiedener netzseitiger Funkstationen, betreffend welche die Empfangszeitpunkt-Messungen erfolgen, keine zeitliche Synchronisation aufweisen. In diesem Fall kann nicht davon ausgegangen werden, dass gleichartige Signale, wie z.B. für alle Teilnehmerstationen in einer Funkzelle bestimmte Signalisierungsnachrichten, von verschiedenen netzseitigen Funkstationen gleichzeitig ausgestrahlt werden. Dies entspricht z.B. den Bedingungen in einem Flash-OFDM System.

In Ausgestaltung der Erfindung wird vor der Bestimmung der Position der zweiten Teilnehmerstation unter Verwendung des zweiten Lokalisierungsverfahrens geprüft, ob eine Bestimmung der Position der zweiten Teilnehmerstation unter Verwendung des ersten Lokalisierungsverfahrens möglich ist. Dieses Vorgehen eignet sich z.B. dann, wenn bevorzugt das erste Lokalisierungsverfahren eingesetzt werden soll, und das zweite hingegen nur, wenn der Einsatz des ersten unmöglich oder erschwert ist.

Bei dem ersten Lokalisierungsverfahren kann es sich z.B. um das Matrix-Verfahren handeln. Bei dem an sich bekannten Matrix-Verfahren messen $M$ Teilnehmerstationen die Signale von $N$ netzseitigen Matrix-Verfahren Funkstationen. Diese Messergebnisse werden in ein Gleichungssystem eingegeben, welches lösbar ist, wenn $M \cdot N$ größer ist als $3 \cdot M + N - 1$.

Mit Vorzug wird als Ergebnis der Positionsbestimmung der ersten Teilnehmerstation ein Ergebnis des ersten und/oder des zweiten Lokalisierungsverfahrens ausgegeben, während als Ergebnis der Positionsbestimmung der zweiten Teilnehmerstation ein Ergebnis des zweiten Lokalisierungsverfahrens ausgegeben wird. Bei der ausgegebenen Position der zweiten Teilnehmerstation kann es sich z.B. um eine gewichtete Mittelwertbildung aus der gemäß dem ersten und der gemäß dem zweiten Lokalisierungsverfahren ermittelten Position handeln.

Die erfindungsgemäße Einrichtung zur Positionsbestimmung von Teilnehmerstationen eines Funkkommunikationssystems umfasst Mittel zur Bestimmung der Position einer ersten Teilnehmerstation unter Verwendung eines ersten Lokalisierungsverfahrens auf, wobei bei dem ersten Lokalisierungsverfahren Empfangszeitpunkts-Messungen der ersten Teilnehmerstation und mindestens einer weiteren Teilnehmerstation betreffend Signale einer Mehrzahl netzseitiger Funkstationen verwendet werden. Weiterhin sind Mittel vorhanden zur Bestimmung der Position der ersten Teilnehmerstation unter Verwendung eines zweiten Lokalisierungsverfahrens, wobei bei dem zweiten Lokalisierungsverfahren Signalstärke-Messungen der ersten Teilnehmerstation betreffend Signale einer Mehrzahl netzseitiger Funkstationen verwendet werden. Schließlich sind Mittel vorgesehen zur Bestimmung der Position einer zweiten Teilnehmerstation unter Verwendung des zweiten Lokalisierungsverfahrens, wobei jeweils ein Ergebnis der Bestimmung der Position der ersten Teilnehmerstation unter Verwendung des ersten und des zweiten Lokalisierungsverfahrens berücksichtigt wird.

Das erfindungsgemäße Computerprogrammprodukt zur Positionsbestimmung von Teilnehmerstationen eines Funkkommunikationssystems umfasst Mittel zur Bestimmung der Position einer ersten Teilnehmerstation unter Verwendung eines ersten Lokalisierungsverfahrens auf, wobei bei dem ersten Lokalisierungsverfahren Empfangszeitpunkts-Messungen der ersten Teilnehmerstation und mindestens einer weiteren Teilnehmerstation betreffend Signale einer Mehrzahl netzseitiger Funkstationen verwendet werden. Weiterhin sind Mittel vorhanden zur Bestimmung der Position der ersten Teilnehmerstation unter Verwendung eines zweiten Lokalisierungsverfahrens vorhanden, wobei bei dem zweiten Lokalisierungsverfahren Signalstärke-Messungen der ersten Teilnehmerstation betreffend Signale einer Mehrzahl netzseitiger Funkstationen verwendet werden. Schließlich sind Mittel vorgesehen zur Bestimmung der Position einer zweiten Teilnehmerstation unter Verwendung des zweiten Lokalisierungsverfahrens, wobei jeweils ein Ergebnis der Bestimmung der Position der ersten Teilnehmerstation unter Verwendung des ersten und des zweiten Lokalisierungsverfahrens berücksichtigt wird.

Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Die erfindungsgemäße Einrichtung und das erfindungsgemäße Computerprogrammprodukt eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:

Figur 1: einen Ausschnitt aus einem Mobilfunkkommunikationssystem,

Figur 2: ein Ablaufdiagramm.

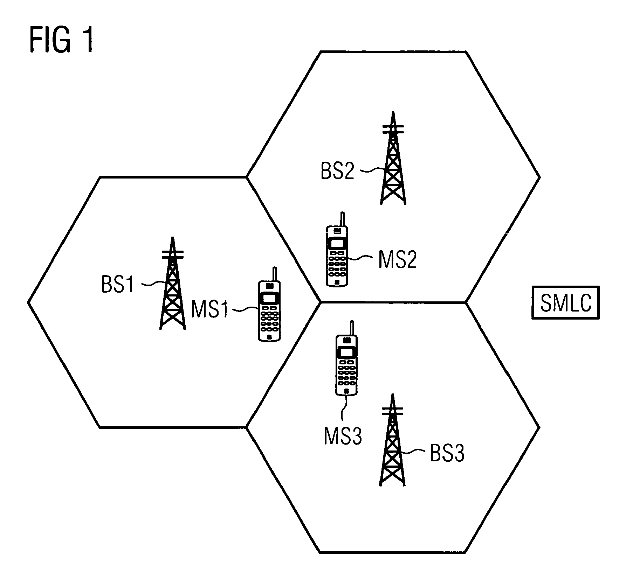

Der in Figur 1 dargestellte Ausschnitt aus einem Mobilfunkkommunikationssystem umfasst die netzseitigen Funkstationen BS1, BS2 und BS3, sowie die Teilnehmerstationen MS1, MS2 und MS3. Die Funkzellen der netzseitigen Funkstationen BS1, BS2 und BS3 sind vereinfachend jeweils als Sechsecke dargestellt. Aus Gründen der Übersichtlichkeit sind weitere Teilnehmerstationen, netzseitige Funkstationen und andere netzseitige Einrichtungen nicht in Figur 1 dargestellt. Im folgenden wird davon ausgegangen, dass es sich bei dem betrachteten Mobilfunkkommunikationssystem um ein Flash-OFDM System handelt; die Erfindung ist jedoch auch auf andere Funkkommunikationssysteme anwendbar. Die Funktechnologie von Flash-OFDM wird beschrieben z.B. in

Flarion Technologies, Inc: OFDM for Mobile Data Communications, Whitepaper, März 2003, und

Flarion Technologies, Inc: Flash-OFDM® for 450 MHz, Advanced Mobile Broadband Solution for 450 MHz Operators, Whitepaper, November 2004,

gefunden auf www.flarion.com/products/white_papers.asp.

Weiterer Bestandteil des Mobilfunkkommunikationssystems der Figur 1 ist die Einrichtung SMLC (Serving Mobile Location Center), welche der Bestimmung der Positionen der Teilnehmerstationen MS1, MS2 und MS3 dient. Die Einrichtung SMLC empfängt hierzu Messergebnisse von Teilnehmerstationen MS1, MS2 und MS3 und berechnet unter Verwendung dieser Messergebnisse die Positionen von Teilnehmerstationen MS1, MS2 und MS3. Es wird unter anderem das von CPS (Cambridge Positioning System) entwickelte Matrix-Verfahren eingesetzt, welches beschrieben wird z.B. in

C. Drane, P. J. Duffett-Smith, S. Hern, J. Brice: "Mobile Positioning using E-OTD without LMUs", proceedings of AeroSense 2003, SPIE's 17th Annual International Symposium on Aerospace/Defense Sensing, Simulation, and Controls, (2003).

Bei dem Matrix-Verfahren werden die Positionen einer Mehrzahl von Teilnehmerstationen gemeinsam bestimmt. Hierfür bestimmen diese Teilnehmerstationen die Empfangszeitpunkte von von netzseitigen Funkstationen ausgestrahlten Signalen. Bei Flash-OFDM Systemen können für die Messungen der Teilnehmerstationen Beacon-Signale herangezogen werden, welche periodisch von netzseitigen Funkstationen ausgestrahlt werden, beschrieben z.B. in WO 2004/019529 A2. Die Sendeleistung, mit welcher die Beacon-Signale ausgestrahlt werden, ist höher als die Sendeleistung anderer in dem Flash-OFDM System ausgestrahlter Signale. Aufgrund dessen empfängt eine Teilnehmerstation in der Regel Beacon-Signale mehrerer netzseitiger Funkstationen. Die mehreren Messergebnisse können dann netzseitig zur Positionsbestimmung unter Verwendung des Matrix-Verfahrens verwendet werden.

Die Teilnehmerstationen senden die Ergebnisse ihrer Empfangszeitpunktmessungen an die Einrichtung SMLC. In der Einrichtung SMLC wird im Rahmen des Matrix-Verfahrens folgendes Gleichungssystem gelöst:

$$c \cdot t_{ik} = \left| r_i - b_k \right| + \beta_i + \alpha_k \, ,$$

wobei

c: die Lichtgeschwindigkeit.

$i=1...M$: die Anzahl der Teilnehmerstationen, welche die Empfangszeitpunktmessungen an die Einrichtung SMLC liefern.

$k=1...N$: die Anzahl der netzseitigen Funkstationen, in Bezug auf deren Signale die Empfangszeitpunkte von den Teilnehmerstationen bestimmt werden.

$t_{ik}$: der gemessene Zeitpunkt, zu welchem das Signal der k-ten netzseitigen Funkstation von der i-ten Teilnehmerstation empfangen wird.

$r_i$: der Vektor, welcher im zweidimensionalen ausgehend von einem bestimmten Ursprung zur i-ten Teilnehmerstation zeigt.

$b_k$: der Vektor, welcher im zweidimensionalen ausgehend von dem bestimmten Ursprung zur k-ten netzseitigen Funkstation zeigt.

$\beta_i$: der Zeitoffset der internen Uhr der i-ten Teilnehmerstation.

$\alpha_k$: der Offset des Signalsendezeitpunktes der k-ten netzseitigen Funkstation. Bei Flash-OFDM Systemen existiert keine Synchronität zwischen verschiedenen netzseitigen Funkstationen, d.h. die verschiedenen netzseitigen Funkstationen versenden ihre Beacon-Signale nicht notwendigerweise gleichzeitig. Daher eignet sich das Matrix-Verfahren besonders für Flash-OFDM Systeme, denn es benötigt im Gegensatz zu vielen anderen Lokalisierungsverfahren keine Synchronisierung zwischen den netzseitigen Funkstationen.

Das obenstehende Gleichungssystem weist $M \cdot N$ Gleichungen für $3 \cdot M + N - 1$ Unbekannte auf. Löst man das Gleichungssystem, erhält man als Ergebnis die Position der M Teilnehmerstationen. Jedoch existieren Minimalkonfigurationen, für welche das Gleichungssystem noch lösbar ist. Beispielsweise muss für $M = 2$ gelten $N = 5$, und für $M = 3$ muss gelten $N = 4$. Die Verfügbarkeit von ausreichend vielen messenden Teilnehmerstationen ist daher wichtig für eine gute Positionsbestimmung mit der Matrix-Methode. Die Messungen durch die verschiedenen Teilnehmerstationen erfolgen vorzugsweise simultan oder in etwa simultan. Es ist jedoch auch möglich, von einer Teilnehmerstation ermittelte Messergebnisse zu speichern und bei einer späteren Berechnung, d.h. Lösung des Gleichungssystems, zu verwenden. In diesem Fall befindet sich die jeweilige Teilnehmerstation bei der Durchführung der Berechnung in der Regel nicht mehr an dem Ort, an welchem sie die Messungen durchgeführt hat.

Für den Spezialfall, dass lediglich von einer einzelnen Teilnehmerstation Messungen vorliegen und keine gespeicherten Messergebnisse verwendet werden sollen, muss ein anderes Lokalisierungsverfahren zum Einsatz kommen. In

P.J. Duffett-Smith, P. Hansen: "Precise Time Transfer in a Mobile Radio Terminal", Proc. ION NTM 2005 Meeting, Januar 24-26

wird das so genannte Solo-Matrix-Verfahren vorgestellt, welches eine Ortsbestimmung unter Verwendung von Empfangszeitpunktmessungen einer einzelnen Teilnehmerstation vorgestellt. Es ist jedoch davon auszugehen, dass dieses Verfahren in nicht synchronisierten Systemen aufgrund der mangelnden zeitlichen Kohärenz zu einer schlechten Performanz der Positionsbestimmung führt.

Neben der Ortsbestimmung über das Matrix-Verfahren ist in dem betrachteten System eine Positionsbestimmung unter Verwendung eines zweiten, unterschiedlichen Verfahrens möglich. Dieses zweite Verfahren verwendet Signalfeldstärkemessungen von Teilnehmerstationen. Beispiele für derartige Verfahren sind CIT+, beschrieben z.B. in

M. Kuipers, P. Gradalski, M. Pakulski: "Low Cost Positioning and Efficient Fallback in GSM and UTRAN Networks", Joint 2nd Workshop on Positioning, Navigation and Communication 2005, (WPNC 05),

und E-CITA, beschrieben z.B. in

H. Schmitz, M. Kuipers, K. Majewski, P. Stadelmeyer: "A new method for positioning of mobile users by comparing a time series of measured reception power levels with predictions", Vehicular Technology Conference, 2003, VTC 2003-Spring, April 2003, Volume: 3, S. 1993- 1997. Eine Teilnehmerstation bestimmt bei dem zweiten Lokalisierungsverfahren die Empfangsleistung eines oder mehrerer Signale mehrerer netzseitiger Funkstationen. Bei Flash-OFDM Systemen können die oben bereits erläuterten Beacon-Signale für die Messungen der Empfangsstärken herangezogen werden. Unter Verwendung dieser Messgrößen kann dann, gegebenenfalls unter Verwendung weiterer Messgrößen, die Position der Teilnehmerstation bestimmt werden. Bei der Einbeziehung der Empfangsstärkemessungen wird ein Modell eingesetzt, im folgenden als Pathloss-Modell bezeichnet. Unter Verwendung des Pathloss-Modells können aus der Messung der Empfangsleistung eines oder mehrerer Signale einer oder mehrerer netzseitiger Funkstationen Informationen über die Position der die Messung durchführenden Teilnehmerstation gewonnen werden.

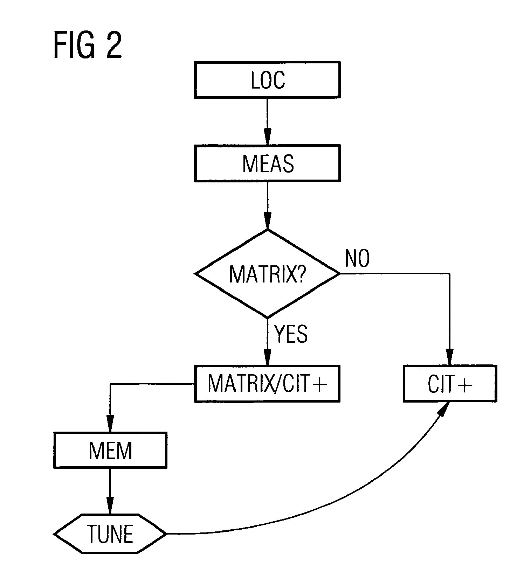

Im folgenden wird das Ablaufdiagramm der Figur 2 erläutert. Zu Beginn erfolgt im Verfahrensschritt LOC eine Anfrage, die Position einer Teilnehmerstation zu bestimmen. Diese Lokalisierungsanfrage kann von der jeweiligen Teilnehmerstation oder auch von einer netzseitigen Einrichtung ausgehen. Im folgenden Verfahrensschritt MEAS misst die Teilnehmerstation sowohl Empfangszeitpunkte als auch Empfangsstärken von Beacon-Signalen mehrerer netzseitiger Funkstationen. Hierzu wird die Teilnehmerstation gegebenenfalls aufgefordert. Die Teilnehmerstation versendet diese Messergebnisse an eine netzseitige Funkstation, von welcher diese an die Einrichtung SMLC weitergeleitet werden. Weitere Teilnehmerstationen messen zumindest Empfangszeitpunkte von Beacon-Signalen, welche sie von mehreren netzseitigen Funkstationen empfangen, und reporten diese Messergebnisse.

Im Schritt MATRIX? wird geprüft, ob ausreichend viele Messungen von Empfangszeitpunkten vorliegen, so dass das Gleichungssystem des Matrix-Verfahrens lösbar ist. Trifft dies nicht zu, entsprechend dem Ast "NO" in Figur 2, erfolgt in dem Verfahrensschritt CIT+ lediglich die Positionsbestimmung mit dem zweiten, die Empfangsleistungsmessungen verwendenden Ortsbestimmungsverfahren. Das zweite Lokalisierungsverfahren kann somit als Fallback-Lösung für das Matrix-Verfahren genutzt werden. Dies trifft insbesondere auf den Fall zu, dass im Schritt MEAS Empfangszeitpunkts-Messungen ausschließlich von derjenigen Teilnehmerstation, deren Position zu bestimmen ist, durchgeführt werden.

Sind genügend Messergebnisse der Empfangszeitpunkte vorhanden, entsprechend dem Ast "YES" in Figur 2, erfolgt in dem Schritt MATRIX/CIT+ die Berechnung der Position der Teilnehmerstation mit dem Matrix-Verfahren. Zusätzlich zur Positionsbestimmung mit dem Matrix-Verfahren wird die Position der Teilnehmerstation auch mit dem zweiten Lokalisierungsverfahren ermittelt. Letzteres ist möglich, da die Teilnehmerstation nicht nur die Empfangszeitpunkte, sondern auch die Empfangsstärken gemessen hat. Als Ergebnis der Ortsbestimmung kann entweder das Ergebnis des Matrix-Verfahrens, oder das Ergebnis des die Empfangsleistungsmessungen verwendenden Ortsbestimmungsverfahrens, oder auch eine Kombination dieser beiden Größen, wie z.B. in Form eines gewichteten Mittelwertes, ausgegeben werden.

Im Schritt MEM wird sowohl die unter Verwendung des Matrix-Verfahrens als auch die unter Verwendung des zweiten Ortsbestimmungsverfahrens ermittelte Position der Teilnehmerstation gespeichert. Die beiden Ergebnisse können nun miteinander verglichen werden. Im Schritt TUNE wird das Ergebnis der Ortsbestimmung unter Verwendung des Matrix-Verfahrens dazu eingesetzt, das Pathloss-Modell des zweiten Lokalisierungsverfahrens zu verbessern. Denn in der Regel ist unter Verwendung des Matrix-Verfahrens eine genauere Lokalisierung einer Teilnehmerstation möglich. Das Pathloss-Modell wird dementsprechend derart modifiziert, dass es bei den gegebenen Empfangsleistungsmessungen nicht mehr das ursprüngliche Ergebnis, d.h. das Ergebnis gemäß dem unveränderten Pathloss-Modell, liefert, sondern ein modifiziertes Ergebnis. Dieses modifizierte Ergebnis ist dem Ergebnis des Matrix-Verfahrens ähnlicher als das ursprüngliche Ergebnis.

Das überarbeitete Pathloss-Modell kann dann bei späteren Positionsbestimmungen von Teilnehmerstationen eingesetzt werden, wobei eine höhere Genauigkeit erzielt wird. Dies ist insbesondere dann vorteilhaft, wenn auf den Einsatz des Matrix-Verfahrens verzichtet werden soll. Gründe hierfür können sein, dass nicht ausreichend Messergebnisse für Empfangszeitpunkte vorhanden sind. Letzteres ist insbesondere dann möglich, wenn auf die Speicherung von Empfangszeitpunktsmessergebnisse von aktuell nicht aktiven Teilnehmerstationen verzichtet werden soll. Die Verwendung dieser gespeicherten Messergebnisse ist zwar vorteilhaft für das Ergebnis des Matrix-Verfahrens, da durch eine Vielzahl von verfügbaren Messungen die Genauigkeit der Positionsbestimmung gesteigert wird. Es werden jedoch die Positionen von Teilnehmerstationen bestimmt, welche unter Umständen keine Bestimmung ihrer Position wünschen. Auf diese Weise kann das Matrix-Verfahren mit dem Datenschutz kollidieren, denn bei Verwendung von gespeicherten Messergebnissen werden indirekt Informationen über den Aufenthaltsort eines Teilnehmers über einen längeren Zeitraum gespeichert.

Das beschriebene Vorgehen ermöglicht es somit, das Matrix-Verfahren anzuwenden, wenn hierfür ausreichend viele Messungen vorhanden sind. Trifft letzteres nicht zu, muss dennoch nicht völlig auf die Genauigkeit der Ortsbestimmung des Matrix-Verfahrens verzichtet werden, denn das Pathloss-Modell des zweiten Lokalisierungsverfahrens wurde unter Verwendung von einer vorhergehenden Ortsbestimmung einerseits durch das Matrix-Verfahren und andererseits durch das zweite Verfahren modifiziert, so dass die Lokalisierungsgenauigkeit des zweiten Lokalisierungsverfahrens verbessert ist.

**Patentansprüche**

1. Verfahren zur Positionsbestimmung von Teilnehmerstationen (MS1, MS2, MS3) eines Funkkommunikationssystems, bei dem eine Bestimmung der Position einer ersten Teilnehmerstation (MS1, MS2, MS3) unter Verwendung eines ersten Lokalisierungsverfahrens erfolgt,
wobei bei dem ersten Lokalisierungsverfahren Empfangszeitpunkts-Messungen der ersten Teilnehmerstation (MS1, MS2, MS3) und mindestens einer weiteren Teilnehmerstation (MS1, MS2, MS3) betreffend Signale einer Mehrzahl netzseitiger Funkstationen (BS1, BS2, BS3) verwendet werden,
und eine Bestimmung der Position der ersten Teilnehmerstation (MS1, MS2, MS3) unter Verwendung eines zweiten Lokalisierungsverfahrens erfolgt,
wobei bei dem zweiten Lokalisierungsverfahren Signalstärke-Messungen der ersten Teilnehmerstation (MS1, MS2, MS3) betreffend Signale einer Mehrzahl netzseitiger Funkstationen (BS1, BS2, BS3) verwendet werden, und bei einer Bestimmung der Position einer zweiten Teilnehmerstation (MS1, MS2, MS3) unter Verwendung des zweiten Lokalisierungsverfahrens jeweils ein Ergebnis der Bestimmung der Position der ersten Teilnehmerstation (MS1, MS2, MS3) unter Verwendung des ersten Lokalisierungsverfahrens und des zweiten Lokalisierungsverfahrens berücksichtigt wird.

2. Verfahren nach Anspruch 1, bei dem
im Rahmen der Berücksichtigung die unter Verwendung des ersten Lokalisierungsverfahrens bestimmte Position der ersten Teilnehmerstation (MS1, MS2, MS3) mit der unter Verwendung des zweiten Lokalisierungsverfahrens bestimmten Position der ersten Teilnehmerstation (MS1, MS2, MS3) verglichen wird.

3. Verfahren nach Anspruch 2, bei dem
im Rahmen der Berücksichtigung unter Verwendung des Vergleichs ein bei dem zweiten Lokalisierungsverfahren verwendetes Modell verändert wird.

4. Verfahren nach einem der Ansprüche 1 bis 3, bei dem
für das erste Lokalisierungsverfahren die Empfangszeitpunkts-Messungen anhand der gleichen Signale erfolgen wie die Signalstärke-Messungen.

5. Verfahren nach einem der Ansprüche 1 bis 4, bei dem Signale verschiedener netzseitiger Funkstationen (BS1, BS2, BS3), betreffend welche die Empfangszeitpunkts-Messungen erfolgen, keine zeitliche Synchronisation aufweisen.

6. Verfahren nach einem der Ansprüche 1 bis 5, bei dem vor der Bestimmung der Position der zweiten Teilnehmerstation (MS1, MS2, MS3) unter Verwendung des zweiten Lokalisierungsverfahrens geprüft wird, ob eine Bestimmung der Position der zweiten Teilnehmerstation (MS1, MS2, MS3) unter Verwendung des ersten Lokalisierungsverfahrens möglich ist.

7. Verfahren nach einem der Ansprüche 1 bis 6, bei dem es sich bei dem ersten Lokalisierungsverfahren um das Matrix-Verfahren handelt.

8. Verfahren nach einem der Ansprüche 1 bis 7, bei dem
als Ergebnis der Positionsbestimmung der ersten Teilnehmerstation (MS1, MS2, MS3) ein Ergebnis des ersten und/oder des zweiten Lokalisierungsverfahrens ausgegeben wird, und
als Ergebnis der Positionsbestimmung der zweiten Teilnehmerstation (MS1, MS2, MS3) ein Ergebnis des zweiten Lokalisierungsverfahrens ausgegeben wird.

9. Verfahren nach einem der Ansprüche 1 bis 8, bei dem es sich bei dem Funkkommunikationssystem um ein Flash-OFDM System handelt.

10. Einrichtung (SMLC) zur Positionsbestimmung von Teilnehmerstationen (MS1, MS2, MS3) eines Funkkommunikationssystems, mit
Mitteln zur Bestimmung der Position einer ersten Teilnehmerstation (MS1, MS2, MS3) unter Verwendung eines ersten Lokalisierungsverfahrens, wobei bei dem ersten Lokalisierungsverfahren Empfangszeitpunkts-Messungen der ersten Teilnehmerstation (MS1, MS2, MS3) und mindestens einer weiteren Teilnehmerstation (MS1, MS2, MS3) betreffend Signale einer Mehrzahl netzseitiger Funkstationen (BS1, BS2, BS3) verwendet werden,
Mitteln zur Bestimmung der Position der ersten Teilnehmerstation (MS1, MS2, MS3) unter Verwendung eines zweiten Lokalisierungsverfahrens, wobei bei dem zweiten Lokalisierungsverfahren Signalstärke-Messungen der ersten Teilnehmerstation (MS1, MS2, MS3) betreffend Signale einer Mehrzahl netzseitiger Funkstationen (BS1, BS2, BS3) verwendet werden,
Mitteln zur Bestimmung der Position einer zweiten Teilnehmerstation (MS1, MS2, MS3) unter Verwendung des zweiten Lokalisierungsverfahrens, wobei jeweils ein Ergebnis der Bestimmung der Position der ersten Teilnehmerstation (MS1, MS2, MS3) unter Verwendung des ersten Lokalisierungsverfahrens und des zweiten Lokalisierungsverfahrens berücksichtigt wird.

11. Computerprogrammprodukt zur Positionsbestimmung von Teilnehmerstationen (MS1, MS2, MS3) eines Funkkommunikationssystems, mit
Mitteln zur Bestimmung der Position einer ersten Teilnehmerstation (MS1, MS2, MS3) unter Verwendung eines ersten Lokalisierungsverfahrens, wobei bei dem ersten Lokalisierungsverfahren Empfangszeitpunkts-Messungen der ersten Teilnehmerstation (MS1, MS2, MS3) und mindestens einer weiteren Teilnehmerstation (MS1, MS2, MS3) betreffend Signale einer Mehrzahl netzseitiger Funkstationen (BS1, BS2, BS3) verwendet werden,
Mitteln zur Bestimmung der Position der ersten Teilnehmerstation (MS1, MS2, MS3) unter Verwendung eines zweiten Lokalisierungsverfahrens,
wobei bei dem zweiten Lokalisierungsverfahren Signalstärke-Messungen der ersten Teilnehmerstation (MS1, MS2, MS3) betreffend Signale einer Mehrzahl netzseitiger Funkstationen (BS1, BS2, BS3) verwendet werden,
Mitteln zur Bestimmung der Position einer zweiten Teilnehmerstation (MS1, MS2, MS3) unter Verwendung des zweiten Lokalisierungsverfahrens, wobei jeweils ein Ergebnis der Bestimmung der Position der ersten Teilnehmerstation (MS1, MS2, MS3) unter Verwendung des ersten Lokalisierungsverfahrens und des zweiten Lokalisierungsverfahrens berücksichtigt wird.

FIG 1

## FIG 2

**Europäisches Patentamt**

# EUROPÄISCHER RECHERCHENBERICHT

Nummer der Anmeldung

EP 06 01 1780

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 260 829 A (LUCENT TECHNOLOGIES INC [US]) 27. November 2002 (2002-11-27) <br> * Zusammenfassung * <br> * Absatz [0022] * <br> * Absatz [0024] - Absatz [0036] * <br> * Absatz [0040] - Absatz [0044] * <br> ----- | 1-11 | INV. <br> G01S5/02 <br> G01S5/14 |
| X | US 2004/022214 A1 (GOREN DAVID P [US] ET AL) 5. Februar 2004 (2004-02-05) <br> * Zusammenfassung * <br> * Absatz [0006] - Absatz [0011] * <br> * Absatz [0025] - Absatz [0033] * <br> ----- | 1-11 | |
| Y | EP 1 555 845 A (SIEMENS AG [DE]) 20. Juli 2005 (2005-07-20) <br> * Absatz [0007] - Absatz [0034] * <br> ----- | 1-11 | |
| Y | JAMI I ET AL: "Comparison of methods of locating and tracking cellular mobiles" IEE COLLOQUIUM NOVEL METHODS OF LOCATION AND TRACKING OF CELLULAR MOBILES AND THEIR SYSTEM APPLICATION, IEE, LONDON, BG, 17. Mai 1999 (1999-05-17), Seiten 1-5, XP002125128 "LOCATION ESTIMATION METHODS* <br> ----- | 1-11 | **RECHERCHIERTE SACHGEBIETE (IPC)** <br><br> G01S <br> H04Q |
| A | US 6 990 428 B1 (KAISER DARYL A [US] ET AL) 24. Januar 2006 (2006-01-24) <br> * Zusammenfassung * <br> * Spalte 1, Zeile 45 - Spalte 2, Zeile 64 * <br> ----- | 1-11 | |
| A | US 2005/195109 A1 (DAVI GREGG S [US] ET AL) 8. September 2005 (2005-09-08) <br> * Zusammenfassung * <br> * Absatz [0010] - Absatz [0027] * <br> ----- | 1-11 | |

Der vorliegende Recherchenbericht wurde für alle Patentansprüche erstellt

| Recherchenort | Abschlußdatum der Recherche | Prüfer |
|---|---|---|
| München | 24. Oktober 2006 | Dollinger, Franz |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument

EPO FORM 1503 03.82 (P04C03)

**EP 1 865 335 A1**

**ANHANG ZUM EUROPÄISCHEN RECHERCHENBERICHT**
**ÜBER DIE EUROPÄISCHE PATENTANMELDUNG NR.**

EP 06 01 1780

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2006

| Im Recherchenbericht angeführtes Patentdokument | | Datum der Veröffentlichung | Mitglied(er) der Patentfamilie | | Datum der Veröffentlichung |
|---|---|---|---|---|---|
| EP 1260829 | A | 27-11-2002 | JP | 2003087849 A | 20-03-2003 |
| | | | US | 2002175855 A1 | 28-11-2002 |
| US 2004022214 | A1 | 05-02-2004 | KEINE | | |
| EP 1555845 | A | 20-07-2005 | KEINE | | |
| US 6990428 | B1 | 24-01-2006 | US | 2006069526 A1 | 30-03-2006 |
| US 2005195109 | A1 | 08-09-2005 | WO | 2005091905 A2 | 06-10-2005 |

EPO FORM P0461

Für nähere Einzelheiten zu diesem Anhang : siehe Amtsblatt des Europäischen Patentamts, Nr.12/82

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004019529 A2

**In der Beschreibung aufgeführte Nicht-Patentliteratur**

- **C. DRANE ; P. J. DUFFETT-SMITH ; S. HERN ; J. BRICE.** Mobile Positioning using E-OTD without LMUs. *proceedings of AeroSense 2003, SPIE's 17th Annual International Symposium on Aerospace/Defense Sensing, Simulation, and Controls,* 2003
- **P.J. DUFFETT-SMITH ; P. HANSEN.** Precise Time Transfer in a Mobile Radio Terminal. *Proc. ION NTM 2005 Meeting*
- **M. KUIPERS ; P. GRADALSKI ; M. PAKULSKI.** Low Cost Positioning and Efficient Fallback in GSM and UTRAN Networks. *Joint 2nd Workshop on Positioning, Navigation and Communication,* 2005
- **H. SCHMITZ ; M. KUIPERS ; K. MAJEWSKI ; P. STADELMEYER.** A new method for positioning of mobile users by comparing a time series of measured reception power levels with predictions. *Vehicular Technology Conference, 2003, VTC 2003-Spring,* April 2003, vol. 3, 1993-1997